# EUROPEAN PATENT APPLICATION

(11) **EP 1 585 235 A1**
(43) Date of publication of application: **12.10.2005**
(21) Application number: 04290971.3
(22) Date of filing: 08.04.2004
(51) Int. Cl.: H04B 10/155

(54) **Method of transmitting digital signals over an optical transmission system**

(71) Applicant: ALCATEL, 75008 Paris (FR)
(72) Inventor: Pecci, Pascal, 91380 Chilly-Mazarin (FR); Lanne, Stèphanie, 75014 Paris (FR)
(74) Representative: Dreiss, Fuhlendorf, Steimle & Becker

(57) **Abstract**

A method of transmitting digital signals over an optical transmission system is described. The method comprises the following steps: generating a signal according to the non-return-to-zero (NRZ) format, forwarding the NRZ signal to an optical delay filter (16), and using an output signal of the optical delay filter (16) as a signal according to the modified duobinary return-to-zero (MD-RZ) format.

## Description

The invention relates to a method of transmitting digital signals over an optical transmission system.

In the publication of P. J. Winzer and S. Chandrasekhar, Return-to-zero modulation with electrically continuously tunable duty cycle using single NRZ modulator, Electronics Letters, Vol. 33, No. 11, 29 May 2003, pages 859 - 860, an electrical input signal is encoded and then split. The resulting two paths are electrically delayed with respect to each other and are then applied to a dual-drive Mach Zehnder modulator. The output signal of the Mach Zehnder modulator represents a signal according to a so-called chirped modified duobinary return-to-zero format, i.e. a chirped MD-RZ signal.

The afore-described transmission system requires a dual-drive Mach Zehnder modulator and an electrical delay circuit.

It is an object of the present invention to provide a method of transmitting digital signals over an optical transmission system using a MD-RZ signal but requiring less components compared to the prior art.

The invention solves this object by a method according to claim 1, by an optical transmitter according to claim 5 and by an optical transmission system according to claim 6.

The invention first generates a signal according to the non-return-to-zero (NRZ) format. Then, this NRZ signal is forwarded to an optical delay filter. And then, the invention uses an output signal of the optical delay filter as a signal according to the modified duobinary return-to-zero (MD-RZ) format.

Compared to the prior art, the invention generates the MD-RZ signal without requiring a dual-drive optical modulator or an electrical delay circuit. As a result, the invention provides the advantage that the MD-RZ signal is generated with less components.

In an advantageous embodiment of the invention, the optical modulator is influenced by the input signal at only one input port, and the output signal of the optical modulator is used as a chirped NRZ signal. In another advantageous embodiment of the invention, a dual-driven optical modulator is used, the optical modulator is influenced by the input signal at two input ports, and the output signal of the optical modulator is used as a chirp-free NRZ signal. Thus, the MD-RZ signal is available with a phase being not constant or being constant.

In an advantageous embodiment of the invention, the optical delay filter is a Mach Zehnder filter wherein the MD-RZ signal is provided at a destructive port of the Mach Zehnder filter. Thus, a very effective solution is provided for generating the MD-RZ signal.

In another advantageous embodiment of the invention, the optical delay filter has a time delay xT, with x being a value between 0 and 0,5 and T being the time duration of a time cell of a single binary digit. In particular, in connection with a bit rate of 43,06 GBit/sec, the optical delay filter has a time delay of 0,43T.

Further features, applications and advantages of the invention will become apparent from the following description of exemplary embodiments of the invention which are shown in the drawings. There, all described and shown features themselves or in any combination represent the subject matter of the invention, independently of their wording in the description or their representation in the drawings and independently of their combination in the claims or the dependencies of the claims.

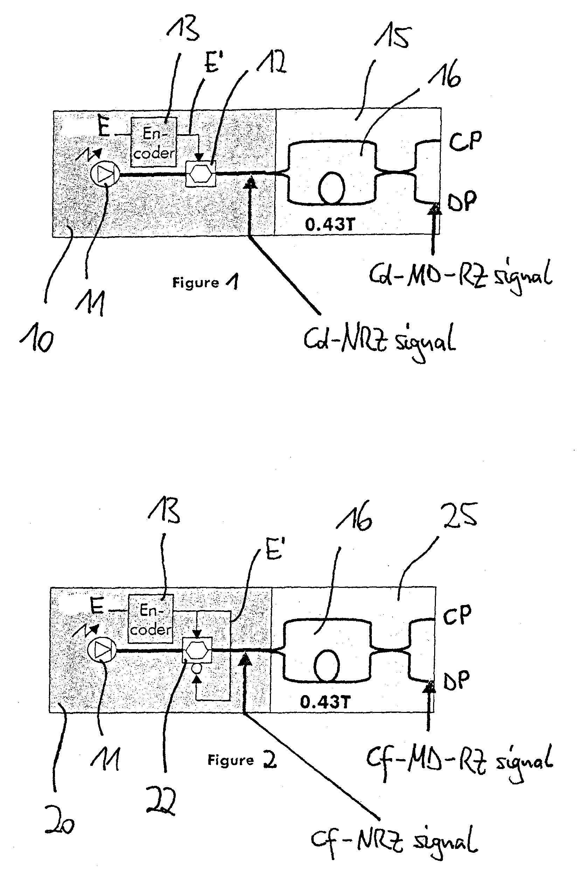

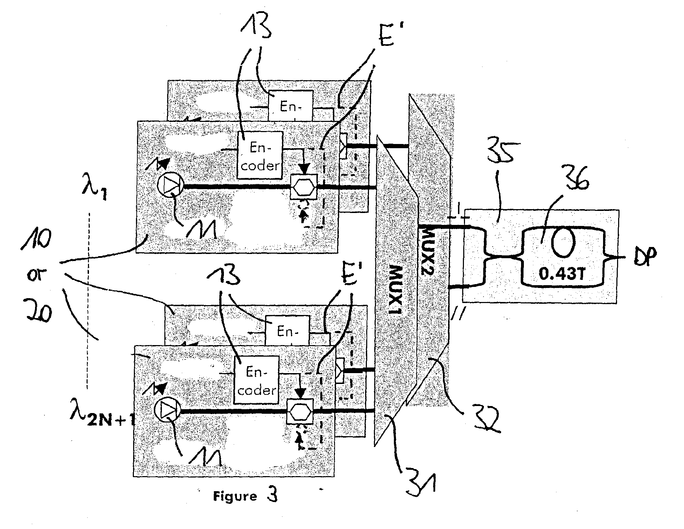

Figure 1 shows a schematic block diagram of a first embodiment of a method of transmitting digital signals over an optical transmission system according to the invention, figure 2 shows a schematic block diagram of a second embodiment of a method of transmitting digital signals over an optical transmission system according to the invention, and figure 3 shows a schematic block diagram of a third embodiment of a method of transmitting digital signals over an optical transmission system according to the invention.

In figure 1, a block 10 is followed by a block 15. Both blocks 10, 15 may be part of an optical transmitter or of an optical transmission system for transmitting digital signals.

The block 10 comprises a light emitting source 11 for generating an optical signal, and an optical modulator 12 for receiving and influencing the optical signal. An electrical encoder 13 is provided which receives a binary input signal E with a given bit rate, e.g. 43,06 GBit/sec, and which influences the optical modulator 12 with an electrical output signal E'.

The optical modulator 12 outputs an optical signal depending on the signal E' received from the encoder 13. The encoder 13 comprises an algorithm which influences the optical modulator 12 such that an optical signal is generated according to a so-called chirped non-return-to-zero (NRZ) format, i.e. a NRZ signal with a phase which is not constant. This output signal of the modulator 12 is characterized by the abbreviation Cd-NRZ in figure 1.

The block 15 comprises a passive optical delay filter 16, in particular a Mach Zehnder filter. The optical delay filter 16 receives the output signal of the optical modulator 12, The two channels of the optical delay filter 16 have a given optical delay time xT, with x being a value between 0 and 0,5 and T being the time duration of a time cell of a single binary digit.

With e.g. the above-mentioned given bit rate of 43,06 GBit/sec and a grid value of 100 GHz according to the ITU standard (ITU = international telecommunication union), the value x is selected to be 0,43, i.e. the time delay between the two channels of the optical delay filter 16 is 0,43T.

The optical delay filter 16 provides two output ports, a constructive port CP and a destructive port DP. At the destructive port DP of the optical delay filter 16, a chirped modified duobinary return-to-zero signal is present. This signal at the destructive port DP is characterized by the abbreviation Cd-MD-RZ in figure 1.

In figure 2, a block 20 is followed by a block 25. Both blocks 20, 25 may be part of an optical transmitter or an optical transmission system for transmitting digital signals.

The block 20 of figure 2 is similar to the block 10 of figure 1. The only difference is the replacement of the optical modulator 12 of figure 1 by a dual-driver optical modulator 22 in figure 2. Both ports of the optical modulator 22 of figure 2 are supplied with the encoded electrical signal E' generated by the encoder 13.

The encoder 13 of figure 2 comprises an algorithm which influences the two ports of the optical modulator 22 such that a signal according to a so-called chirp-free non-return-to-zero (NRZ) format is generated at the output of the optical modulator 22, i.e. a NRZ signal with a constant phase. This output signal of the modulator 22 is characterized by the abbreviation Cf-NRZ in figure 2.

The block 25 of figure 2 is identical to the block 15 of figure 1. It comprises the passive optical delay filter 16, in particular a Mach Zehnder filter. The time delay of the optical delay filter 16 is selected to be 0,43T. At the destructive port DP of the optical delay filter 16, a chirp-free modified duobinary return-to-zero signal is present. This signal at the destructive port DP is characterized by the abbreviation Cf-MD-RZ in figure 2.

The Cd-MD-RZ signal of figure 1 and the Cf-MD-RZ signal of figure 2 are identical with regard to their intensities, but they are different with regard to their phases. The phase of the Cd-MD-RZ signal is chirped, i.e. it is not constant, whereas the phase of the Cf-MD-RZ signal is chirp-free, i.e. it is constant.

The above described methods of generating a Cd-MD-RZ signal or a Cf-MD-RZ signal have proven to be very effective, in particular they do not require a dual-drive optical modulator or an electrical delay circuit.

In figure 3, a Cd-NRZ signal according to figure 1 or a Cf-NRZ signal according to figure 2 is generated several times for different wavelengths λ₁ to λ_{2N+1} of the light emitting source 11. For that purpose, either an equal number of identical blocks 10 or an equal number of identical blocks 20 is provided. With regard to the blocks 10 or the blocks 20, reference is made to figures 1 or 2 and the respective descriptions. In figure 3, the possibility of using either the blocks 10 or the blocks 20 is shown by the dashed lines of the encoded signal E'.

The output signals of the blocks 10 or 20, i.e. the Cd-MD-RZ signals or the Cf-MD-RZ signals corresponding to the different wavelengths λ₁ to λ_{2N+1}, are multiplexed by two multiplexers 31, 32 relating to the two polarizations of the optical signals. The output signals of these two multiplexers 31, 32 are forwarded to a block 35 which comprises a passive optical delay filter 36, in particular a Mach Zehnder filter.

The optical delay filter 36 of figure 3 is similar to the optical delay filter 16 of figures 1 and 2 with the only difference that the optical delay filter 36 of figure 3 receives not only one, but two input signals, i.e. the two output signals of the two multiplexers 31, 32.

At the destructive port DP of the optical delay filter 36, a Cd-MD-RZ signal or a Df-MD-RZ signal is present, depending on whether the blocks 10 or the blocks 20 are present.

The method of generating the Cd-MD-RZ signal or the Cf-MD-RZ signal for different wavelengths λ₁ to λ_{2N+1} of the light emitting source has proven to be very effective, in particular it only requires a single optical delay filter.

## Claims

1. A method of transmitting digital signals over an optical transmission system comprising the following steps: generating a signal according to the non-return-to-zero (NRZ) format, forwarding the NRZ signal to an optical delay filter (16, 36), and using an output signal of the optical delay filter (16, 36) as a signal according to the modified duobinary return-to-zero (MD-RZ) format.

2. The method of claim 1 comprising the following further steps: forwarding a signal of a light emitting source (11) to an optical modulator (12, 22), providing a binary input signal (E) to an encoder (13), influencing the optical modulator (12, 22) depending on the input signal (E), and using the output signal of the optical modulator (12, 22) as the NRZ signal.

3. The method of claim 2 comprising the following further steps: influencing the optical modulator (12) with the input signal (E) at only one input port, and using the output signal of the optical modulator (12) as a chirped NRZ signal.

4. The method of claim 1 comprising the following further steps: using a dual-driven optical modulator (22), influencing the optical modulator (22) with the input signal (E) at two input ports, and using the output signal of the optical modulator (22) as a chirp-free NRZ signal.

5. An optical transmitter for an optical transmission system for transmitting digital signals comprising: means for generating a signal according to the non-return-to-zero (NRZ) format, an optical delay filter (16, 36) for receiving the NRZ signal and for generating an output signal according to the modified duobinary return-to-zero (MD-RZ) format.

6. An optical transmission system for transmitting digital signals comprising: means for generating a signal according to the non-return-to-zero (NRZ) format, an optical delay filter (16, 36) for receiving the NRZ signal and for generating an output signal according to the modified duobinary return-to-zero (MD-RZ) format.

7. The transmitter of claim 5 or the transmission system of claim 6 wherein the optical delay filter (16, 36) has a time delay xT, with x being a value between 0 and 0,5 and T being the time duration of a time cell of a single binary digit.

8. The transmitter of claim 5 or the transmission system of claim 6 wherein the optical delay filter (16, 36) has a time delay of 0,43T, with T being the time duration of a time cell of a single binary digit.

9. The transmitter of claim 5 or the transmission system of claim 6 wherein the MD-RZ signal is provided at a destructive port (DP) of the optical delay filter (16, 36).

10. The transmitter of claim 5 or the transmission system of claim 6 wherein the optical delay filter (16, 36) is a Mach Zehnder filter.

11. The transmitter of claim 5 or the transmission system of claim 6 wherein the optical modulator (12) is influenced by the input signal (E) at only one input port, and wherein the output signal of the optical modulator (12) is used as a chirped NRZ signal.

12. The transmitter of claim 5 or the transmission system of claim 6 wherein a dual-driven optical modulator (22) is provided, wherein the optical modulator (22) is influenced by the input signal (E) at two input ports, and wherein the output signal of the optical modulator (22) is used as a chirp-free NRZ signal.
